**Europäisches Patentamt**

**European Patent Office**

**Office européen des brevets**

(19)

(11) Veröffentlichungsnummer: **0 016 352**
**B1**

# EUROPÄISCHE PATENTSCHRIFT

(12)

(45) Veröffentlichungstag der Patentschrift:
**12.01.83**

(21) Anmeldenummer: **80100898.8**

(22) Anmeldetag: **25.02.80**

(51) Int. Cl.³: **A 01 G 27/00**

(54) **Einrichtung zur Versorgung von Topfpflanzen.**

(30) Priorität: **15.03.79 DE 2910217**

(43) Veröffentlichungstag der Anmeldung:
**01.10.80 Patentblatt 80/20**

(45) Bekanntmachung des Hinweises auf die Patenterteilung:
**12.01.83 Patentblatt 83/2**

(84) Benannte Vertragsstaaten:
**AT BE CH FR GB IT NL**

(56) Entgegenhaltungen:
**BE-A-704 123**
**FR-A-1 152 961**
**FR-A-1 537 059**
**FR-A-2 255 843**
**US-A-2 072 172**

(73) Patentinhaber: **LEIFHEIT INTERNATIONAL GmbH,**
**Leifheitstrasse, D-5408 Nassau/Lahn (DE)**

(72) Erfinder: **Joswig, Siegfried, Ing. Grad., Austrasse 5,**
**D-5241 Kausen/Betzdorf/Sieg (DE)**
Erfinder: **Keils, Peter, Schulstrasse 2, D-5409 Obernhof**
**(DE)**
Erfinder: **Liebscher, Johannes, Dr.-Haupt-Weg,**
**D-5408 Nassau (DE)**
Erfinder: **Tiwi, Peter, Hungerbachweg 2,**
**D-5421 Fachbach (DE)**

## Einrichtung zur Versorgung von Topfpflanzen

Die Erfindung betrifft eine Einrichtung zur Versorgung von Topfpflanzen gemäss dem Oberbegriff des Anspruches 1.

Derartige Einrichtungen dienen dazu, die Pflanzen über einen längeren Zeitraum ohne zwischenzeitliches Giessen zumindest mit Wasser zu versorgen. Dabei unterscheidet man heute hauptsächlich unter zwei Gruppen. Die eine Art ist allgemein unter Hydro-Kultur bekannt. Dabei steht das Wurzelwerk der Pflanze voll im Wasser bzw. einer Nährstofflösung und wird lediglich durch ein körniges, luftdurchlässiges Substrat gehalten. Die Erde ist dabei vollkommen von den Wurzeln der Pflanzen entfernt. Die zweite, hauptsächlich angewendete Art ist die reine Erdkultur, verbunden mit einer sogenannten Langzeitbewässerung. Dabei wird die Pflanze wie eh und je rein in Erde gezogen. Die Bewässerung der Pflanze erfolgt dabei aus einem Wasserreservoir über eine Dochtanordnung. Eine derartige Bewässerungsvorrichtung für Topfpflanzen wurde zum Beispiel durch die DE-OS 26 10 613 bekannt. Dabei ist der Kulturtopf auf eine Einheit mit Saugdocht aufgesteckt und zusammen mit dieser in einem Umtopf, der als Wasserreservoir dient, angeordnet. Nachteilig an dieser Ordnung ist die direkte Verbindung des Saugdochtes mit der Blumenerde bis tief in das Primärwurzelwerk. Die Erde saugt sich bis zur absoluten Sättigung voll, so dass die Pflanze überwässert wird. Dies führt in Verbindung mit dem Erdreich zu Fäulniserscheinungen am Wurzelwerk. Ein weiterer Mangel ist darin zu sehen, dass zum Beispiel bei längerer Urlaubsabwesenheit der Wasservorrat nicht erhöht werden kann.

Durch die französische Patentschrift 1 492 789 Zusatz 95.471 wurde eine Lösung bekannt, bei der es möglich ist, für längere Abwesenheit eine grössere Wassermenge zur Verfügung zu stellen, ohne dass die Pflanze als solche voll im Wasser steht. Dazu dienen auf den Umtopf aufzusetzende Arme, die schwenkbar an einer Schulter des Topfes befestigt sind. Die Schulter nimmt weiter einen Saugdocht auf. Der Kontakt der Blumenerde mit dem Saugdochtende ist bei dieser Ausführung sehr unsicher. Nachteilig kommt noch hinzu, dass sowohl der Kulturtopf als auch der Übertopf speziell aufeinander abgestimmt sein müssen.

Durch die französische Patentschrift 1 395 154 wurde eine weitere Einrichtung zur Bewässerung von Topfpflanzen bekannt. Diese hat neben den geschilderten Problemen der fehlenden Urlaubslösung den Nachteil, dass das Wasserreservoir und die Einheit mit Saugdocht ganz speziell aufeinander abgestimmt sind. Die Aufnahme in üblichen Umtöpfen bzw. Übertöpfen ist nicht möglich. Dadurch muss der Kulturtopf bereits als Sichttopf ausgebildet werden. Zudem kommt eine spezielle, recht aufwendige Adaptionseinrichtung mit der Einheit mit Saugdocht hinzu. Dadurch wird die Baugruppe recht teuer, so dass sie nur schwer einem breiten Anwendungsbereich zugänglich ist.

Auch die Ausführung nach der FR-PS 1 537 059 ist auf übliche Topfpflanzen in Verbindung mit einfachen, das Wasser aufnehmenden Um- bzw. Übertöpfen nicht anwendbar. Es handelt sich hier um einen mehrere Pflanzen aufnehmenden Pflanzentrog, bei dem die Wasserversorgung über Saugdochte aus kassettenförmig einschiebbaren Wasserbehältern erfolgt.

Aufgabe der Erfindung ist es, eine Einrichtung zur Versorgung von Topfpflanzen zu schaffen, die es ermöglicht, unterschiedliche Wasservolumina zur Urlaubsversorgung zur Verfügung zu stellen, bei der normale, handelsübliche Um- bzw. Übertöpfe verwendet werden können, bei der nur geringfügige Änderungen an den für die Befüllung mit Topfmaschinen ausgelegten Kulturtöpfen ohne Beeinträchtigung des Einsatzes dieser Maschinen notwendig sind und die einfach mit einem derartigen Kulturtopf zu koppeln ist.

Diese Aufgabe wird durch die kennzeichnenden Merkmale des Anspruches 1 gelöst. Durch die flächige Ausbildung des Saugdochtes wird, verbunden mit einer hervorragenden Sauerstoffaufnahme, eine gleichmässige, breitflächige Benässung des Pflanzenträgers erreicht.

Eine punktuale, dem Wurzelwerk schädliche Übernässung, wie sie durch zylindrische Dochtsysteme nicht zu verhindern ist, wird gänzlich ausgeschlossen. Durch die integrierte Adaptionsvorrichtung können, zum Beispiel bei längerer Urlaubsabwesenheit, auch grössere Wasservolumina vorgesehen werden, ohne dass irgendwelche Nachteile für die Pflanze auftreten. Ein weiterer Vorteil ist darin zu sehen, dass alle Bauteile miteinander gekoppelt sind, so dass eine einfache, störungsfreie Handhabung gewährleistet ist. Fehlerquellen sind weitgehend ausgeschlossen. Umständliche Montagearbeiten müssen nicht durchgeführt werden. So erfolgt die Kopplung der Einheit mit Saugdocht mit dem Kulturtopf über eine Zunge. Die Zunge, grossflächig ausgebildet, trägt den Saugdocht. Sie wird über schlitzförmige Öffnungen im Kulturtopf eingeführt. Das hat den Vorteil, dass am Kulturtopf selbst gegenüber den heute allgemein gebräuchlichen Kulturtöpfen nur ganz geringfügige Änderungen durchgeführt werden müssen. Im einfachsten Fall ist eben nur die eine, schlitzförmige Öffnung erforderlich. Dadurch kann der Kulturtopf nach wie vor über automatische Topfmaschinen gefüllt werden.

Um eine noch grossflächigere Befeuchtung des Pflanzenträgers zu erreichen, ist die Zunge an eine im Boden des Kulturtopfes angeordnete Saugmatte angeschlossen. Diese Lösung bietet sich besonders dann an, wenn der Pflanzenträger aus einem zumindest den Wurzelkern unmittelbar einschliessenden Erdkern und einem diesen umgebenden luftdurchlässigen, kapillaren Substrat besteht.

Diese Anordnung ermöglicht eine einfache Realisierung der Hydro-Kultur ohne die bislang allgemein bekannten Schwierigkeiten. Bei der Hydro-Kultur, wie sie derzeit praktiziert wird, ist es erforderlich, spezielle Pflanzen zu züchten. Diese Pflanzen bzw. deren Wurzeln müssen vollkommen vom Erdreich gesäubert werden, bevor sie in das Substrat, in aller Regel Blähton, eingesetzt werden. Dagegen ist es bei der erfindungsgemässen Einrichtung nicht erforderlich, dass die Wurzeln der Pflanzen vom Erdreich gereinigt werden. Die Pflanzen werden dabei mit dem sogenannten Wurzelballen in den Kulturtopf eingesetzt und von einem luftdurchlässigen, kapillaren Substrat umgeben. Dabei spielt es keine Rolle, wieviel Erde noch am Wurzelwerk der Pflanze haften bleibt. Die Pflanze wird ohnehin nach einiger Zeit den Erdballen mit den Wurzeln durchdringen und sich im Substrat verankern. Die Bewässerung und gegebenenfalls die Nährstoffzufuhr erfolgt dann über den flächigen Docht, gegebenenfalls die Saugmatte, die aber nicht zwingend erforderlich ist, über das Substrat in den Wurzelkern.

Die Adaptionsvorrichtung des Kulturtopfes im Umtopf, die erfindungsgemäss durch unterschiedliche, konstruktive Lösungen verwirklicht werden kann, ermöglicht eine Vervielfachung des Wasservolumens ohne den Kulturtopf ins Wasserbad zu stellen. Durch die grossflächige Ausbildung des Saugdochtes wird auch bei dieser relativ grossen Saughöhe eine zuverlässige Befeuchtung der Pflanze erreicht. Da der Füllstandsanzeiger, bedingt durch die Schutzwanne an der Einheit mitwandert, ist auch bei der Einhängung des Kulturtopfes in der Langzeitlösung (Urlaubsanordnung) diese bezüglich einer Überfüllung voll funktionsfähig.

Einige Ausführungsbeispiele der Erfindung werden im folgenden anhand der Zeichnungen näher erläutert.

Es zeigen:
Fig. 1 einen Kulturtopf mit festgekoppelter Einheit sowie Adaptionsvorrichtung und Füllstandsanzeige aufgesetzt auf einen schematisch angedeuteten Umtopf,
Fig. 2 eine Ansicht gemäss Richtung II nach Fig. 1 ohne Umtopf mit schematisch angedeutetem Kulturtopf,
Fig. 3 eine Alternativlösung gemäss Fig. 1,
Fig. 4 eine Ansicht in Richtung IV nach Fig. 3,
Fig. 5 den Kulturtopf nach Fig. III teilweise geschnitten,
Fig. 6 eine Ansicht gemäss Richtung VI in Fig. 5,
Fig. 7 eine weitere Alternativlösung gemäss Fig. 1 mit schematisch angedeutetem Kulturtopf, der damit gekoppelten Einheit, Füllstandsanzeiger und Adaptionsvorrichtung eingesetzt in einen Umtopf,
Fig. 8 eine Ansicht gemäss Richtung VIII in Fig. 7,
Fig. 9 einen Kulturtopf mit schlitzförmiger Öffnung mit Einführschräge, mit Gegenöffnung, mit Einfülltrichter und Einnutung zur Führung eines Anzeigeelementes,
Fig. 10 eine Ansicht in Richtung X nach Fig. 9,
Fig. 11 eine Alternativlösung eines Kulturtopfes nach Fig. 9,
Fig. 12 eine Ansicht in Richtung XII nach Fig. 11,
Fig. 13 eine weitere Alternativlösung einer Einrichtung mit einer in Form eines Ringes ausgeführten Adaptionsvorrichtung,
Fig. 14 eine Ansicht gemäss Richtung XIV nach Fig. 13,
Fig. 15 eine weitere Alternativlösung einer Einheit mit Adaptionsvorrichtung im Fertigungszustand,
Fig. 16 die Einheit gemäss Fig. 15 eingeführt in einen Kulturtopf,
Fig. 17 die Einheit im Kulturtopf verriegelt und in einen Umtopf eingesetzt,
Fig. 18 die Adaptionsvorrichtung ausgefahren und auf einen Umtopf aufgesetzt,
Fig. 19 eine Alternativlösung einer Adaptionsvorrichtung,
Fig. 20 einen Schnitt gemäss der Linie XX nach Fig. 19, wobei auf der linken Bildhälfte der Schiebearm eingefahren und auf der rechten Bildhälfte der Schiebearm ausgefahren ist und
Fig. 21 eine Einrichtung komplett mit Pflanze.

Nur für absolut identische Teile werden im folgenden die gleichen Bezugszeichen gewählt. Weicht ein Teil in seiner konstruktiven Ausbildung, auch wenn es die identische Funktion erfüllt, etwas vom vorhergehenden ab, wird ein neues Bezugszeichen verwendet.

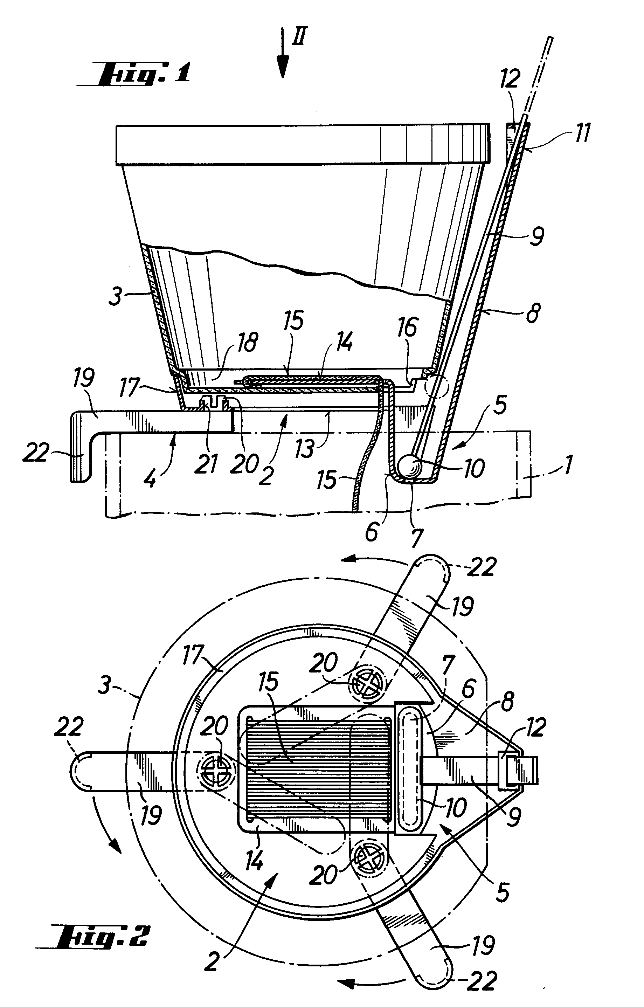

Fig. 1 zeigt eine Einrichtung mit einer Einheit 2 die mit einem Kulturtopf 3 fest zu einer Baugruppe gekoppelt ist. An der Einheit 2 sind die Adaptionsvorrichtung 4 und die Füllstandsanzeige 5 angebracht. Die Füllstandsanzeige 5, die an die Einheit 2 angeformt ist, besteht im wesentlichen aus einer Schutzwanne 6 mit einer Wassereinlauföffnung 7, einem Führungsträger 8, einem Anzeigeelement 9 und dem Schwimmer 10. Am Ende 11 des Führungsträgers 8 ist eine Führungshalterung 12 für das Anzeigeelement vorgesehen.

Aus dem Boden 13 der Einheit 2 ist eine Zunge 14 ausgeformt, die den Saugdocht 15 trägt. Die Zunge 14 mit Saugdocht 15 ist durch eine schlitzförmige Öffnung 16 im Kulturtopf 3 mit diesem gekoppelt. Die möglichen Ausführungsformen der schlitzförmigen Öffnung 16 werden in späteren Beispielen noch näher beschrieben. Der Saugdocht 15 führt in das bei diesem Beispiel nicht näher dargestellte Wasserreservoir des Umtopfes 1. Zur formschlüssigen Verbindung der Einheit 2 mit dem Kulturtopf 3 ist die Einheit mit einem hochgezogenen Rand 17 versehen, der den Sockel 18 des Kulturtopfes 3 aufnimmt. Die Öffnung 16 kann als Aufreissöffnung vorgesehen sein.

Die Adaptionsvorrichtung 4 wird bei diesem Ausführungsbeispiel durch drei Schwenkarme 19, die über geschlitzte Rastzapfen 20 in Halteöffnungen 21 an der Einheit 2 befestigt sind, gebildet.

Zum sicheren Halt am Umtopf 1 sind die Schwenkarme 19 mit Haltekrallen 22 versehen. Diese Haltekrallen 22 dienen gleichzeitig zum Höhenausgleich gegenüber der Schutzwanne 6 beim vollen Einsetzen der Baugruppe in den Umtopf 1. Dargestellt ist in den Figuren 1 und 2 die sogenannte Urlaubslösung mit grossem Wasservolumen.

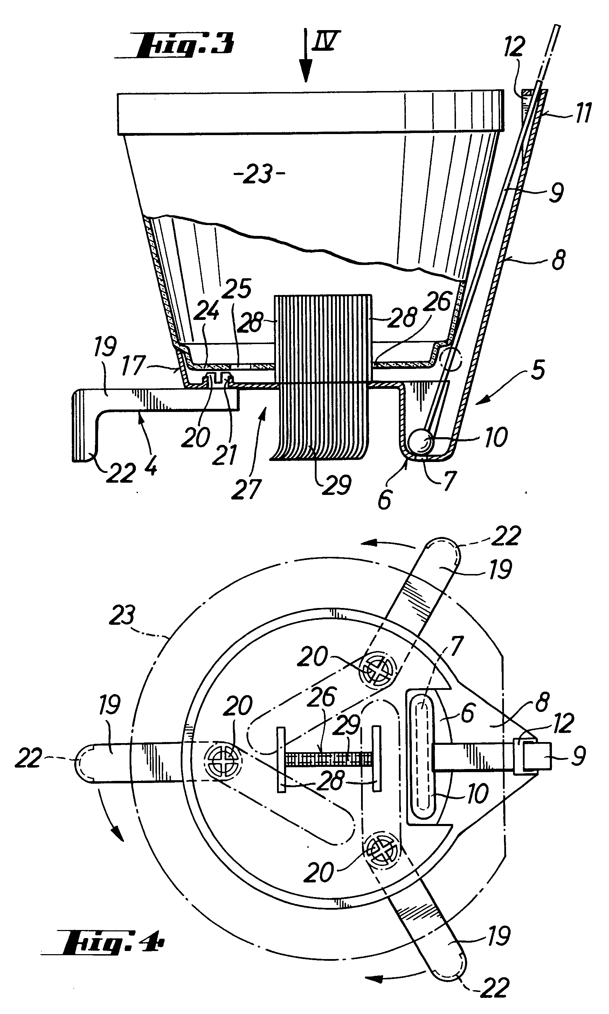

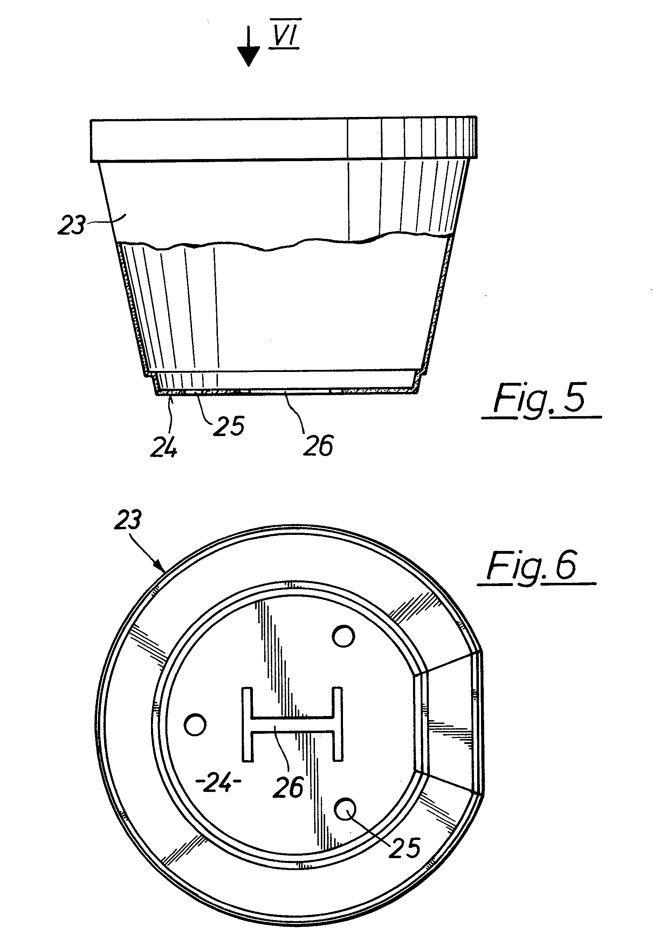

Das Ausführungsbeispiel gemäss den Figuren 3 - 6 unterscheidet sich von der vorab geschilderten Einrichtung durch eine geänderte Kopplung der Einheit an den Kulturtopf. Der Kulturtopf 23 ist am Boden 24 neben den Normalöffnungen 25 mit einer doppel-T-förmigen Öffnung 26 versehen. Diese Doppel-T-Öffnung 26 nimmt die Einheit 27 über die Zunge 28 auf. Die Zunge 28 trägt den Saugdocht 29. Die Füllstandsanzeige 5 und die Adaptionsvorrichtung 4 entsprechen der Ausführung gemäss den Figuren 1 und 2.

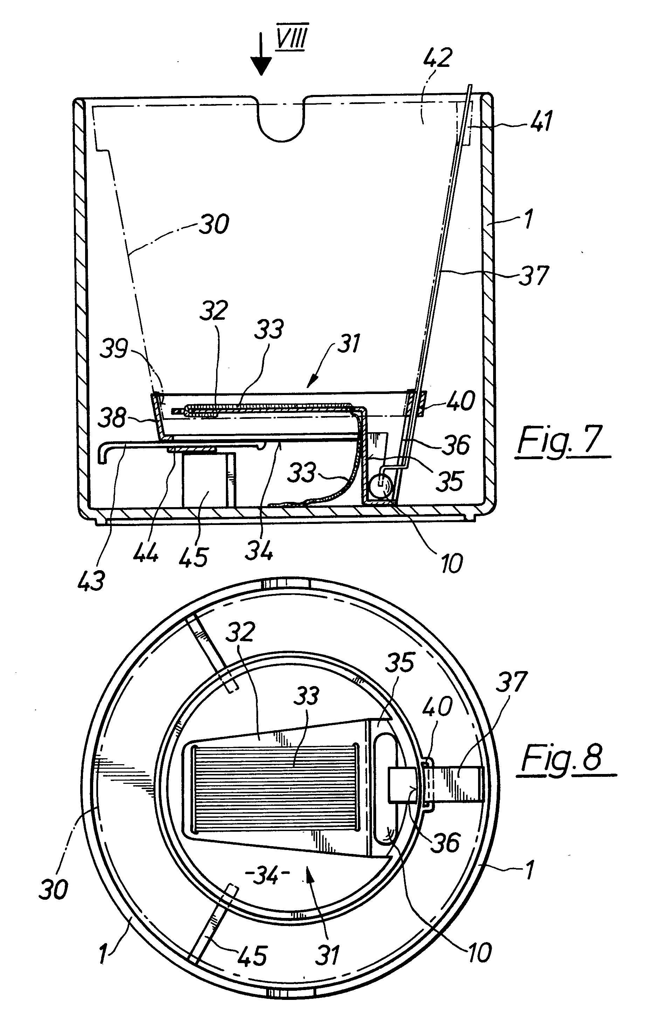

Die Figuren 7 bis 12 zeigen eine weitere Alternativlösung einer Einrichtung. Der Kulturtopf 30 ist mit einer Einheit 31 über eine Zunge 32 gekoppelt. Die Zunge 32 trägt den Saugdocht 33. An den Boden 34 der Einheit 31 ist die Schutzwanne 35 angeformt. Diese ist mit einer seitlichen Öffnung 36 zum Einführen des Anzeigeelementes 37 versehen. Das Anzeigeelement 37 ist zur Aufnahme des Schwimmers 10 abgewinkelt. Am Rand 38 der Einheit 31, er greift formschlüssig in den Sockelbereich 39 des Kulturtopfes 30 ein, ist eine Halterung 40 für das Anzeigeelement 37 der Füllstandsanzeige angeformt. Das Anzeigeelement 37 wird zusätzlich durch eine Einnutung 41 im Randbereich 42 des Kulturtopfes 30 geführt. Am Boden 34 der Einheit 31 sind als Adaptionsvorrichtung Schiebearme 43 vorgesehen. Diese sind in einer bodenfesten Halterung 44 geführt. Als Höhenausgleich für die Schutzwanne 35 dienen am Boden des Umtopfes 1 vorgesehene Stege 45. Der Kulturtopf 30 ist in Fig. 8 nur strichpunktiert angedeutet.

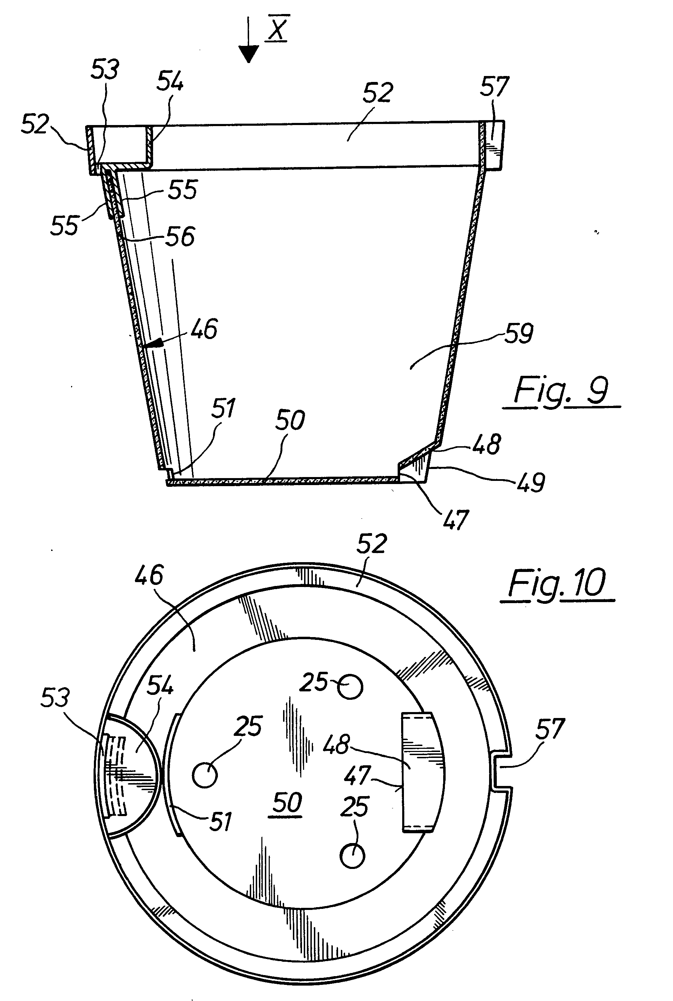

Die Figuren 9 bis 12 zeigen zwei verschiedene Ausführungsformen von Kulturtöpfen mit Einfülltrichter. Es bedarf dabei keiner näheren Erläuterung, dass diese Kulturtöpfe je nach Anwendung variiert und den entsprechenden Einrichtungen angepasst werden können.

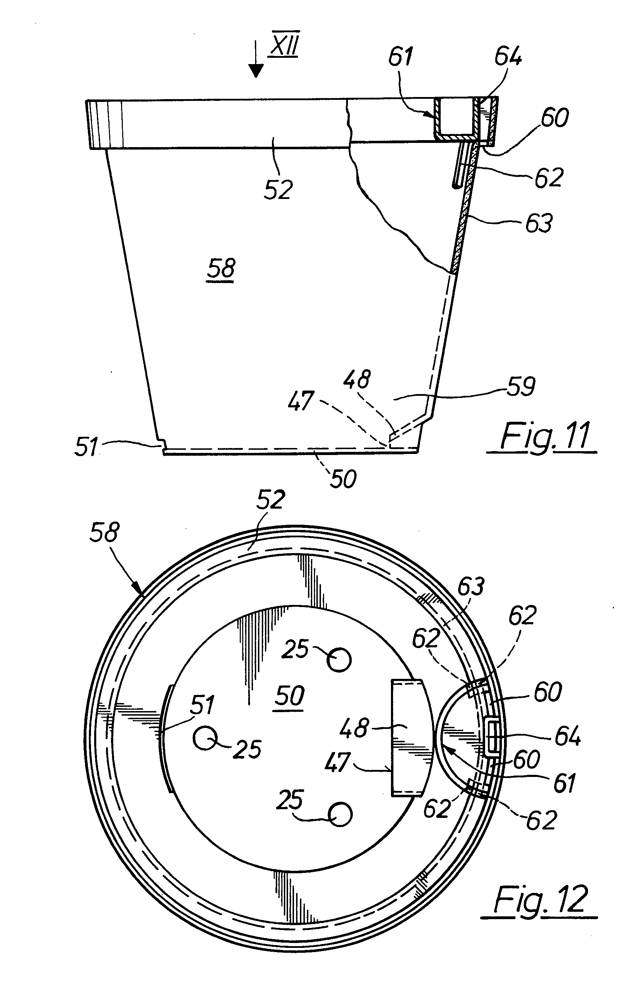

Der Kulturtopf 46 hat eine schlitzförmige Öffnung 47 mit Einführschräge 48. Diese Öffnung 47 wird durch einen Wandausschnitt 49 über dem Kulturtopfboden 50, dabei den Kulturtopfboden in Wandstärke miterfassend, gebildet. Der Kulturtopfboden ist im Bereich der Einführschräge 48 ausgespart. Weiter sind im Kulturtopfboden 50 die Normalöffnungen 25 vorgesehen. Der schlitzförmigen Öffnung 47 liegt eine schlitzförmige Gegenöffnung 51 gegenüber. Der Kulturtopf 46 ist in seinem oberen Randbereich 52 mit einem Schlitz 53 zur Aufnahme eines Einfülltrichters 54 versehen. Der Einfülltrichter 54 ist mittels zwei Haltestege 55 auf die Kulturtopfwand 56 aufgeschoben. Auf der dem Einfülltrichter gegenüberliegenden Seite ist der Randbereich 52 des Kulturtopfes 46 mit einer Einnutung 57 zur Führung eines hier nicht dargestellten Anzeigeelementes versehen. Der Kulturtopf 58 gemäss den Figuren 11 und 12 entspricht im unteren Bereich 59 dem Kulturtopf 46. Der Randbereich 52 des Kulturtopfes 58 ist dabei nur auf der Seite der Einführschräge 48 mit einem Schlitz 60 versehen. In diesem ist der Einfülltrichter 61 eingeschoben. Er wird dabei über vier Finger 62 auf der Kulturtopfwand 63 gehalten. Zusätzlich ist im Einfülltrichter 61 eine Führung 64 für das nicht dargestellte Anzeigeelement angeformt.

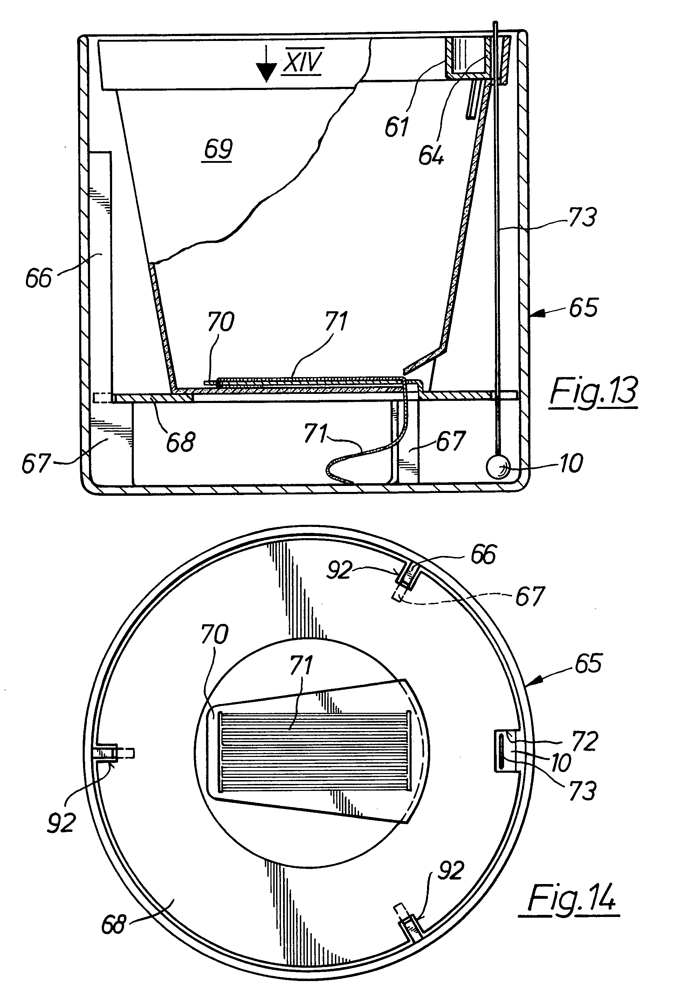

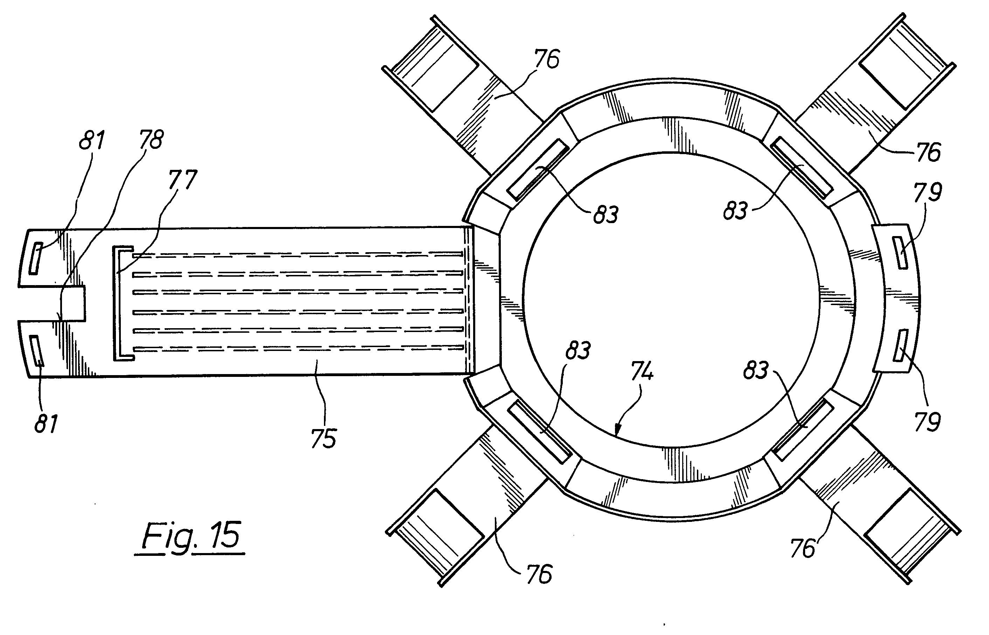

Die Figuren 13 und 14 zeigen eine weitere Alternativlösung einer Einrichtung. Der Umtopf 65 ist dabei mit in unterschiedlichen Höhen angeordneten Stegen 66 und 67 versehen. Die Baugruppe Adaptionsvorrichtung-Einheit mit Saugdocht und Füllstandsanzeige ist dabei als Ring 68 ausgebildet. Die Adaption in zwei verschiedene Höhen, also normal Wasserreservoir vergrössertes Urlaubsreservoir, wird durch Drehen der Baugruppe Kulturtopf 69-Ring 68 und Auflage auf den Stegen 66 bzw. 67 erreicht.

Die Verbindung Ring 68 und Kulturtopf 69 erfolgt über die Zunge 70, die wiederum einen Saugdocht 71 trägt. Der Ring 68 ist mit einem Führungseinschnitt 72 zur Führung des Anzeigeelementes 73 versehen. Als zweite Führung für das Anzeigeelement dient der Einfülltrichter 61 mit Führung 64. In Fig. 14 ist wiederum der Kulturtopf zum besseren Verständnis weggelassen.

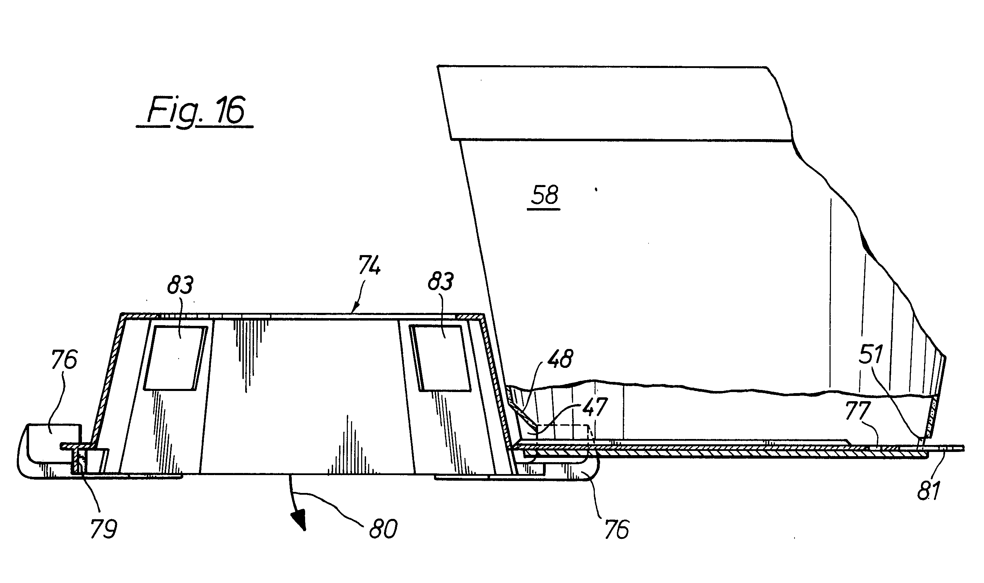

Ein weiteres Ausführungsbeispiel ist in den Figuren 15 bis 18 dargestellt. An die Einheit 74 sind über Filmscharniere eine Zunge 75 und Klapparme 76 angeformt. Die Zunge 75 hat einen Aufnahmeschlitz 77 für einen nicht dargestellten Saugdocht, einen Führungseinschnitt 78 für die Füllstandsanzeige und Rastnocken 79. Die Kopplung der Einheit 74 an einen Kulturtopf, z.B. dem Kulturtopf 58 gemäss Fig. 11, erfolgt dadurch, dass die Zunge 75 über die Einführschräge 48 in die schlitzförmige Öffnung 47 eingeschoben und durch die Gegenöffnung 51 wieder herausgeschoben wird. Danach wird die Einheit 74 in Pfeilrichtung 80 herumgeschwenkt und mittels der Rastnocken 79 und der Rastaufnahmen 81 verrastet. Die Anordnung der Füllstandsanzeige erfolgt gemäss dem Ausführungsbeispiel Fig. 13.

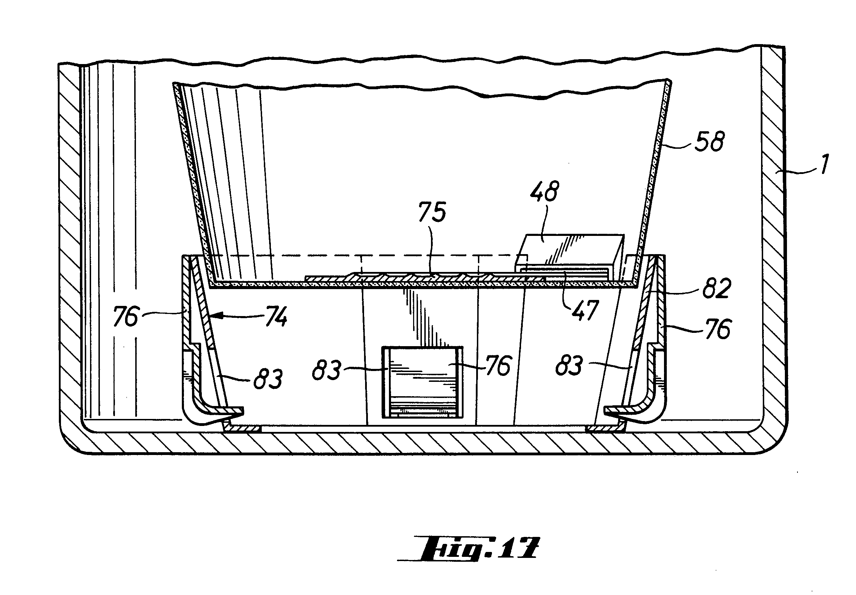

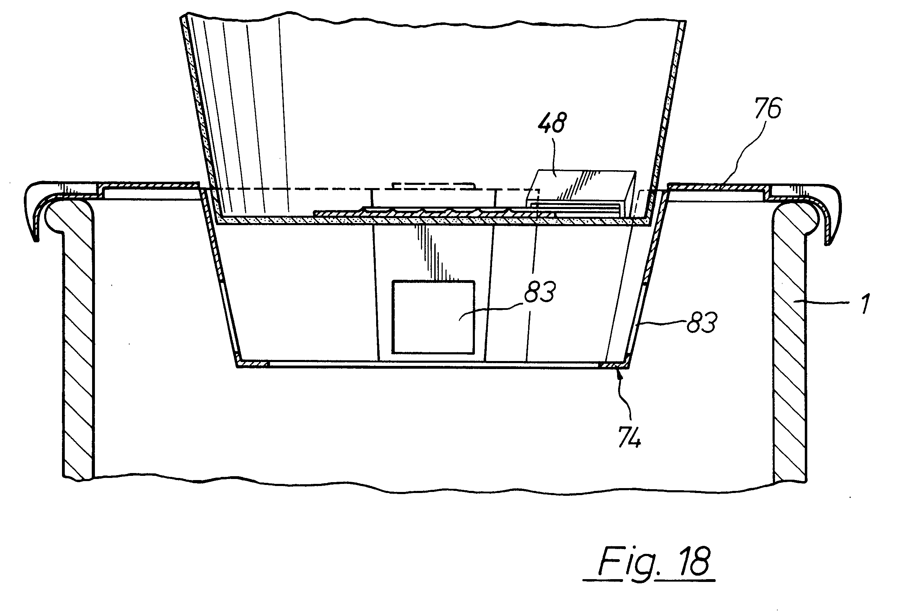

Fig. 17 zeigt die Anordnung der Einheit 74 mit Kulturtopf 58 im Umtopf 1. Die Einheit 74 ist an der Umfangswand 82 mit Halteöffnungen 83 versehen. In diese sind bei Niedrigniveau des Wassers die Klapparme 76 eingeklappt. Bei der sogenannten Urlaubslösung werden gemäss Fig. 18 die Klapparme ausgeklappt und am Rand des Umtopfes 1 eingehängt.

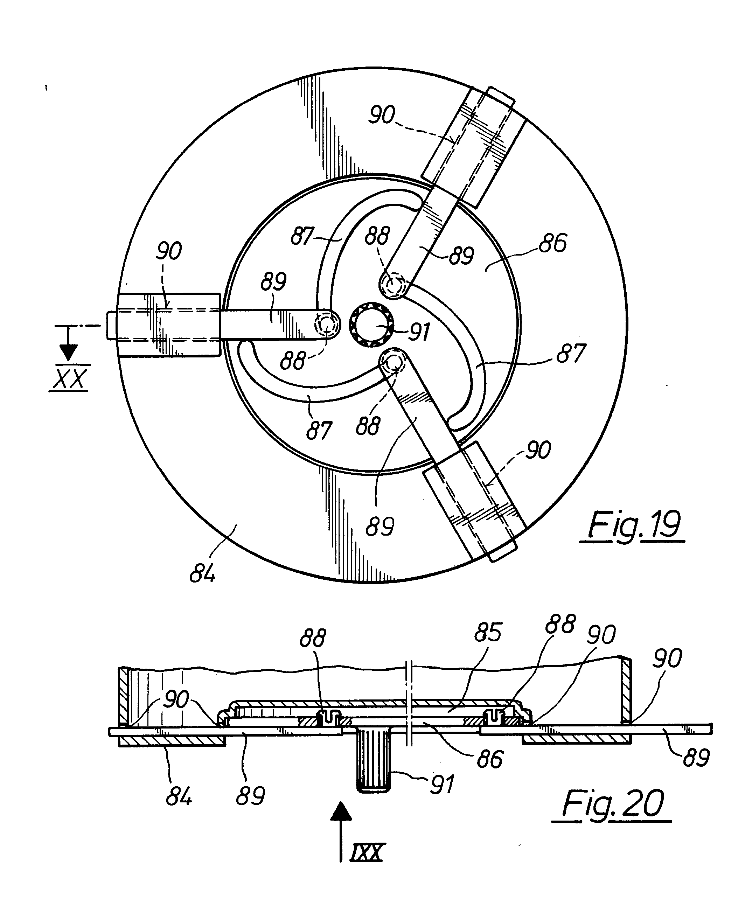

Die Figuren 19 und 20 zeigen eine weitere Alternativlösung einer Adaptionsvorrichtung.

Auf dem Boden 84 eines Kulturtopfes oder einer Einheit ist in einer Vertiefung 85 eine Steuerscheibe 86 mit Spiralkurven 87 drehbar gelagert. In die Spiralkurven 87 greifen Steuerstifte 88 von Schiebearmen 89 ein. Diese Schiebearme 89 laufen in Doppelschlitze 90 des Bodens 84. Verstellt werden die Schiebearme 89 durch einen Drehknopf 91.

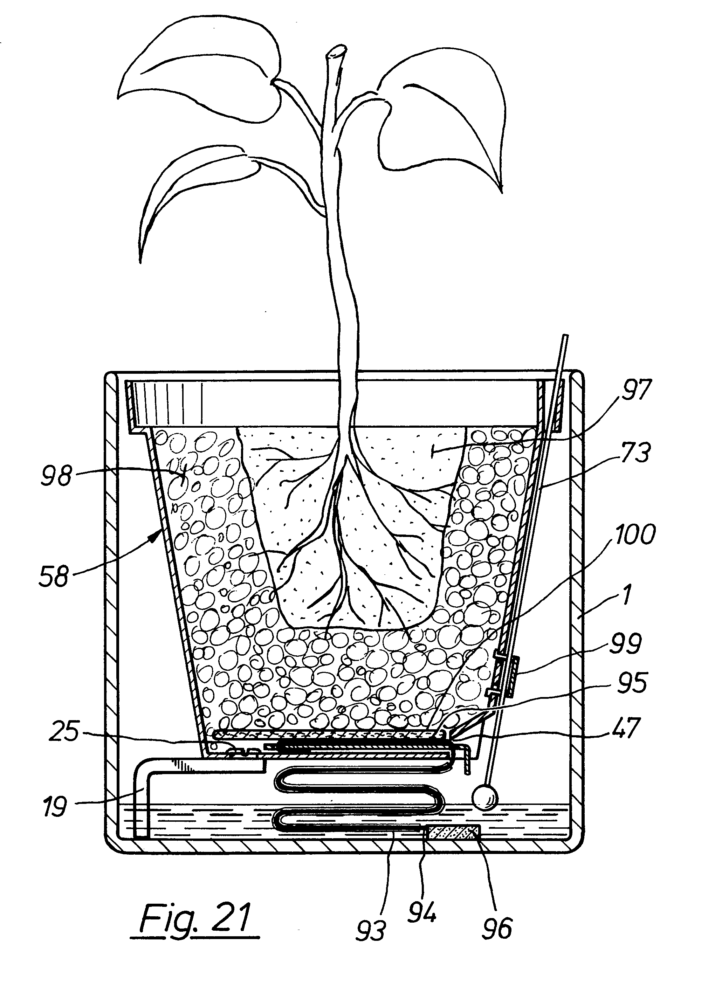

Die aufgeführten Ausführungsbeispiele sollen nur einen Ausschnitt der erfindungsgemässen Variationsmöglichkeiten zeigen. So sind diese dargestellten Beispiele natürlich auch beliebig untereinander variierbar. Eine weitere, in Fig. 21 angedeutete Einrichtung ist zum Beispiel derart denkbar, dass der Kulturtopf 58 gemäss Fig. 11 nur mit einer Öffnung 47 zur Aufnahme eines Saugdochtes mit Zunge ausgeführt wird. Als Adaptionsvorrichtung werden die Schwenkarme 19 unmittelbar in die Normalöffnungen 25 des Kulturtopfes 58 eingerastet. Als Füllstandsanzeige könnte ein Anzeigeelement 73 gemäss Fig. 13 zur Anwendung kommen, wobei am Kulturtopf 58 lediglich eine zusätzliche Führung 99 einzuklipsen wäre.

Des weiteren kann der Saugdocht, wie in Fig. 21 dargestellt, in einem Teilbereich mit einer Schutzfolie 93 zur Verhinderung der Wasserverdunstung überzogen werden. Dadurch wird verhindert, dass bei starker Sonneneinstrahlung und der Urlaubslösung zuviel Wasser auf dem Saugweg verdunstet. Die Schutzfolie wird dabei zweckmässigerweise so ausgeführt, dass nur der unmittelbar im Wasser liegende Saugbereich 94 und der Übergabebereich 95 in der Einheit freibleibt. Um ein sicheres Eintauchen in das Wasser zu gewährleisten, ist es bei dieser Ausführungsform zweckmässig, das Dochtende mit einem Ballastgewicht 96 zu versehen.

Bezugszeichenliste

1 Umtopf
2 Einheit
3 Kulturtopf
4 Adaptionsvorrichtung
5 Füllstandsanzeige
6 Schutzwanne
7 Öffnung
8 Führungsträger
9 Anzeigeelement
10 Schwimmer
11 Ende
12 Führungshalterung
13 Boden
14 Zunge
15 Saugdocht
16 schlitzförmige Öffnung
17 Rand
18 Sockel
19 Schwenkarme
20 Rastzapfen
21 Halteöffnungen
22 Haltekrallen
23 Kulturtopf
24 Boden
25 Normalöffnung
26 Doppel-T-Öffnung
27 Einheit
28 Zunge
29 Saugdocht
30 Kulturtopf
31 Einheit
32 Zunge
33 Saugdocht
34 Boden
35 Schutzwanne
36 seitliche Öffnung
37 Anzeigeelement
38 Rand
39 Sockelbereich
40 Halterung
41 Einnutung
42 Randbereich
43 Schiebearme
44 Halterung
45 Stege
46 Kulturtopf
47 schlitzförmige Öffnung
48 Einführschräge
49 Wandausschnitt
50 Kulturtopfboden
51 Gegenöffnung
52 Randbereich
53 Schlitz
54 Einfülltrichter
55 Haltestege
56 Kulturtopfwand
57 Einnutung
58 Kulturtopf
59 unterer Bereich
60 Schlitz
61 Einfülltrichter
62 Finger
63 Kulturtopfwand
64 Führung
65 Umtopf
66 Stege
67 Stege
68 Ring
69 Kulturtopf
70 Zunge
71 Saugdoch
72 Führungseinschnitt
73 Anzeigeelement
74 Einheit
75 Zunge
76 Klapparme
77 Aufnahmeschlitz
78 Führungseinschnitt
79 Rastnocken
80 Pfeilrichtung
81 Rastaufnahmen
82 Umfangswand
83 Halteöffnungen
84 Boden
85 Vertiefung
86 Steuerscheibe
87 Spiralkurven
88 Steuerstifte
89 Schiebearme
90 Doppelschlitze
91 Drehknopf
92 Schlitze
93 Schutzfolie
94 Saugbereich
95 Übergabebereich
96 Ballastgewicht
97 Erdkern

98    Substrat
99    Führung
100   Saugmatte

## Patentansprüche

1. Einrichtung zur Versorgung von Topfpflanzen mit Wasser, Luft und gegebenenfalls Nährstoffen mit einem die Pflanze aufnehmenden Kulturtopf, einer Einheit mit Saugdocht zur Wasser- und gegebenenfalls Nährstoffzufuhr aus einem das Wasser und die Einheit mit Kulturtopf aufnehmenden Umtopf, dadurch gekennzeichnet, dass die Einheit (2, 27, 31, 68, 74, 84) mit einer federnden Zunge (14, 28, 32, 70, 75) zur Halterung des Saugdochtes (15, 29, 33, 71), der den Pflanzenträger flächig beaufschlagt, und einer an sich bekannten Adaptionsvorrichtung (4, 43, 68, 76, 89) zur höhenunterschiedlichen Anordnung des Kulturtopfes im Umtopf versehen ist, und dass zur Aufnahme der Zunge (14, 28, 32, 70, 75), über die der Kulturtopf (3, 23, 30, 46, 58, 69) mit der Einheit (2, 27, 31, 68, 74) gekoppelt ist, im Kulturtopf (3, 23, 30, 46, 58, 69) zumindest eine schlitzförmige Öffnung (16, 26, 28, 47) vorgesehen ist.

2. Einrichtung nach Anspruch 1, dadurch gekennzeichnet, dass die schlitzförmige Öffnung (47) mit einer Einführschräge (48) versehen ist.

3. Einrichtung nach Anspruch 1 oder 2, dadurch gekennzeichnet, dass die Öffnung (47) durch einen Wandausschnitt (49) über dem Kulturtopfboden (50), dabei den Kulturtopfboden (50) in Wandstärke mit erfassend, gebildet ist.

4. Einrichtung nach Anspruch 2 oder 3, dadurch gekennzeichnet, dass im Bereich der Einführschräge (48) der Kulturtopfboden ausgespart ist.

5. Einrichtung nach einem der Ansprüche 2 bis 4, dadurch gekennzeichnet, dass der Kulturtopf (46, 58) mit einer schlitzförmigen Gegenöffnung (51) versehen ist, die von der Zunge (75) durchdrungen ist, und dass die Zunge (75) an ihrem Ende mit der Einheit (74) verrastet (79, 81) ist.

6. Einrichtung nach Anspruch 5, dadurch gekennzeichnet, dass die Zunge (75) an ihrem Ende zusätzlich mit einer Halterung (78) für eine Füllstandsanzeige versehen ist.

7. Einrichtung nach einem der Ansprüche 1 bis 6, dadurch gekennzeichnet, dass die Zunge an eine grossflächig im Boden des Kulturtopfes (58) angeordnete Saugmatte (100) anschliesst (Fig. 21).

8. Einrichtung nach Anspruch 1, dadurch gekennzeichnet, dass der Kulturtopf an seiner Unterseite mit einer von der Zunge zu verschliessenden Aufreissöffnung versehen ist.

9. Einrichtung nach einem der Ansprüche 1 bis 8, dadurch gekennzeichnet, dass die Adaptionsvorrichtung (4) aus in die Einheit oder den Kulturtopf einrastbaren Schwenkarmen (19) besteht.

10. Einrichtung nach einem der Ansprüche 1 bis 8, dadurch gekennzeichnet, dass die Adaptionsvorrichtung aus in der Einheit oder dem Kulturtopf geführte, durch Spiralkurven (87) betätigte Schiebearme (89) besteht (Fig. 19, 20).

11. Einrichtung nach einem der Ansprüche 1 bis 8, dadurch gekennzeichnet, dass die Adaptionsvorrichtung aus über Filmscharniere an der Einheit befestigte Klapparme (76) besteht (Fig. 15 bis 18).

12. Einrichtung nach Anspruch 11, dadurch gekennzeichnet, dass die Klapparme (76) in Neutralstellung in seitliche Halteöffnungen (83) der Einheit (74) eingerastet sind.

13. Einrichtung nach einem der Ansprüche 1 bis 8, dadurch gekennzeichnet, dass die Adaptionsvorrichtung aus einem mit der Baugruppe verbundenen Ring (68) mit im Randbereich radial nach innen verlaufenden Schlitzen (92) sowie in unterschiedlichen Höhen des Umtopfes (65) angeordneten Stegen (66, 67) besteht.

14. Einrichtung nach Anspruch 13, dadurch gekennzeichnet, dass der Ring (68) und die Einheit mit Saugdoch (71) einstückig ausgeführt sind.

15. Einrichtung nach einem der Ansprüche 1 bis 8 und 9 bis 12, dadurch gekennzeichnet, dass die Einheit (2, 27) mit einer Schutzwanne (6, 35) und einem daran angeformten Führungsträger (8) für die Füllstandsanzeige (5) versehen ist.

16. Einrichtung nach Anspruch 15, dadurch gekennzeichnet, dass das Azeigeelement (9, 37, 73) der Füllstandsanzeige bandförmig ausgebildet ist.

17. Einrichtung nach Anspruch 16, dadurch gekennzeichnet, dass das Anzeigeelement mit Sollbruchmarkierungen zur Anpassung an verschiedene Umtopf-Volumina versehen ist.

18. Einrichtung nach einem der Ansprüche 1 bis 8 und 9 bis 17, dadurch gekennzeichnet, dass der Kulturtopf (56, 58, 69) in seinem oberen Randbereich (52) mit einem Schlitz (53, 60) zur Aufnahme eines Einfülltrichters (54, 61) versehen ist.

19. Einrichtung nach einem der Ansprüche 1 bis 8 und 9 bis 18, dadurch gekennzeichnet, dass der Kulturtopf (46) im Randbereich (52) mit einer Einnutung (57) zur zusätzlichen Führung des Anzeigeelementes versehen ist.

20. Einrichtung nach den Ansprüchen 18 und 19, dadurch gekennzeichnet, dass der Schlitz und die zusätzliche Führung integriert sind.

21. Einrichtung nach Anspruch 20, dadurch gekennzeichnet, dass die Führung (64) im Einfülltrichter (61) vorgesehen ist.

22. Einrichtung nach einem der Ansprüche 1 bis 21, dadurch gekennzeichnet, dass der Saugdocht im Saugbereich (94) mit einer als Bellastgewicht (96) wirkenden Langzeitdüngetablette versehen ist.

23. Einrichtung nach einem der Ansprüche 1 bis 22, dadurch gekennzeichnet, dass der Saugdocht in einem Zwischenbereich zwischen Einheit und Saugbereich (94) im Wasser mit einer Verdunstungsschutzfolie (93) versehen ist.

## Claims

1. A device for supplying potted plants with water, air and, if necessary, nutrients, comprising a plantreceiving pot and a unit comprising an absorbent wick for supplying water and, if necessary, nutrients from an outer pot containing the water and the plant pot unit, characterized in that the unit (2, 27, 31, 68, 74, 84) is provided with a springy tongue (14, 28, 32, 70, 75) to hold the flat absorbent wick (15, 29, 33, 71) which waters the plant holder and with a conventional adapter (4, 43, 68, 76, 89) to vary the height of the plant pot in the outer pot, and that the plant pot (3, 23, 30, 46, 58, 69) is provided with at least one slot-shaped opening (16, 26, 28, 47) for receiving the tongue (14, 28, 32, 70, 75), by means of which the plant pot (3, 23, 30, 46, 58, 69) is connected to the unit (2, 27, 31, 68, 74).

2. A device as claimed in Claim 1, characterized in that the slot-shaped opening (47) is provided with a sloping inlet (48).

3. A device as claimed in Claim 1 or 2, characterized in that the opening (47) is defined by a wall section (49) above the pot bottom (50), in this case also including the thickness of the wall in the pot bottom (50).

4. A device as claimed in Claim 2 or 3, characterized in that the pot bottom is recessed in the area of the sloping inlet (48).

5. A device as claimed in one of Claims 2 to 4, characterized in that the plant pot (46, 58) is provided with a slot-shaped opposite opening (51) penetraded by the tongue (75), and in that the end of the tongue (75) is attached to the unit (74) by the locking means (79, 81).

6. A device as claimed in Claim 5, characterized in that the end of the tongue (75) in also provided with a holder (78) for supporting the level indicator.

7. A device as claimed in one of Claims 1 to 6, characterized in that the tongue is adjacent to an absorbent mat (100) occupying a large area in the bottom of the plant pot (58) (Fig. 21).

8. A device as claimed in Claim 1, characterized in that the underside of the plant pot is provided with a snap opening to be closed by the tongue.

9. A device as claimed in one of Claims 1 to 8, characterized in that the adapter (4) consists of swivel arms (19) which can be locked into the unit or plant pot.

10. A device as claimed in one of Claims 1 to 8, characterized in that the adapter consists of sliding arms (89) extending through the unit or plant pot and operated by spiral cams (87) (Figures 19, 20).

11. A device as claimed in one of Claims 1 to 8, characterized in that the adapter consists of folding arms (76) attached to the unit by film hinges (Figures 15 to 18).

12. A device as claimed in Claim 11, characterized in that the folding arms (76), when in the neutral position, are locked in side openings (83) of the unit (74).

13. A device as claimed in one of Claims 1 to 8, characterized in that the adapter consists of a ring (68) connected to the unit and comprising slots (92) extending radially inwards in the edge area and also side pieces (66, 67) arranged at different heights in the outer pot (65).

14. A device as claimed in Claim 13, characterized in that the ring (68) and absorbent wick unit (71) are designed as one piece.

15. A device as claimed in one of Claims 1 to 8 and 9 to 12, characterized in that the unit (2, 27) is provided with a protective trough (6, 35) and, molded thereto, a support (8) for guiding the level indicator (5).

16. A device as claimed in Claim 15, characterized in that the indicating element (9, 37, 73) of the level indicator is ribbon-shaped.

17. A device as claimed in Claim 16, characterized in that the indicating element is provided with predetermined break marking for adjusting to different outer pot capacities.

18. A device as claimed in one of Claims 1 to 8 and 9 to 17, characterized in that the upper edge area (52) of the plant pot (56, 58, 69) is provided with a slot (53, 60) for receiving a funnel (54, 61).

19. A device as claimed in one of Claims 1 to 8 and 9 to 18, characterized in that in its edge area (52) the plant pot (46) is provided with a channel (57) for additional guiding of the indicating element.

20. A device as claimed in Claims 18 and 19, characterized in that the slot and additional guide are integrated.

21. A device as claimed in Claim 20, characterized in that the guide (64) is provided in the funnel (61).

22. A device as claimed in one of Claims 1 to 21, characterized in that the absorbent wick is provided, in the absorption area (94), with a long-lasting fertilizer tablet which acts as a counterweight (96).

23. A device as claimed in one of Claims 1 to 22, characterized in that in an area between the unit and absorption area (94) in the water, the absorbent wick is provided with a protective film (93) to prevent evaporation.

## Revendications

1. Dispositif destiné à l'approvisionnement de plantes en pot en eau, en air et éventuellement en matières nutritives et comprenant un pot de culture recevant la plante et une unité à mèche aspirante pour l'amenée de l'eau et éventuellement des matières nutritives à partir d'un pot extérieur recevant l'eau et l'unité avec le pot de culture, caractérisé en ce que l'unité (2, 27, 31, 68, 74, 84) est dotée d'une languette élastique (14, 28, 32, 70, 75) pour la retenue de la mèche aspirante (15, 29, 33, 71), qui alimente en plan le support de plante, et d'un dispositif d'adaptation connu en soi (4, 43, 68, 76, 89) pour la disposition à une hauteur différente du pot de culture dans le pot extérieur; et en ce qu'au moins une ouverture en forme de fente (16, 26, 28, 47) est prévue dans le pot de culture (3, 23, 30, 46, 58, 69) pour la réception de la languette (14, 28, 32, 70, 75), par l'intermédiaire de laquelle le pot de culture (3, 23, 30 ,46, 58, 69) est accouplé à l'unité (2, 27, 31, 68, 74).

2. Dispositif selon la revendication 1, caractérisé en ce que l'ouverture (47) en forme de fente est munie d'un plan oblique d'introduction (48).

3. Dispositif selon l'une quelconque des revendications 1 et 2, caractérisé en ce que l'ouverture (47) est formée par une section de paroi (49) sur le fond (50) du pot de culture, c'est-à-dire en tenant compte de l'épaisseur de paroi du fond (50) du pot de culture.

4. Dispositif selon l'une quelconque des revendications 2 et 3, caractérisé en ce que le fond du pot de culture est évidé dans la zone du plan oblique d'introduction (48).

5. Dispositif selon l'une quelconque des revendications 2 à 4, caractérisé en ce que le pot de culture (46, 58) est pourvu d'une ouverture opposée (51) en forme de fente, laquelle est pénétrée par la languette (75); et en ce que la languette (75) est enclenchée (79, 81), à son extrémité, avec l'unité (74).

6. Dispositif selon la revendication 5, caractérisé en ce que la languette (75) est munie, à son extrémité, supplémentairement d'une retenue (78) pour un indicateur de niveau.

7. Dispositif selon l'une quelconque des revendications 1 à 6, caractérisé en ce que la languette se raccorde à une natte aspirante (100) disposée sur une grande surface au fond du pot de culture (58) (Fig. 21).

8. Dispositif selon la revendication 1, caractérisé en ce que le pot de culture présente, sur la face inférieure, une ouverture de déchirement à obturer par la languette.

9. Dispositif selon l'une quelconque des revendications 1 à 8, caractérisé en ce que le dispositif d'adaptation (4) se compose de bras pivotants (19) à même de s'engager dans l'unité ou le pot de culture.

10. Dispositif selon l'une quelconue des revendications 1 à 8, caractérisé en ce que le dispositif d'adaptation se compose de bras coulissants (89) actionnés par des courbes en spirale (87) et guidés dans l'unité ou dans le pot de culture (figures 19 et 20).

11. Dispositif selon l'une quelconque des revendications 1 à 8, caractérisé en ce que le dispositif d'adaptation se compose de bras repliables (76) fixés sur l'unité par l'intermédiaire de charnières en forme de pellicule (figures 15-18).

12. Dispositif selon la revendication 11, caractérisé en ce que les bras repliables (76) s'engagent, dans le position neutre, dans des ouvertures de retenue latérales (83) de l'unité (74).

13. Dispositif selon l'une quelconque des revendications 1 à 8, caractérisé en ce que le dispositif d'adaptation se compose d'un anneau (68) relié au groupe de construction et comprenant des fentes (92) se développant radialement vers l'intérieur dans la zone marginale, ainsi que des entretoises (66, 67) disposées à des hauteurs différentes du pot extérieur (65).

14. Dispositif selon la revendication 13, caractérisé en ce que l'anneau (68) et l'unité à mèche aspirante (71) sont conçus en une seule et même pièce.

15. Dispositif selon l'une quelconque des revendications 1 à 12, caractérisé en ce que l'unité (2, 27) comprend une vasque de protection (6, 35) et un support de guidage (8) formé sur celle-ci et destiné à l'indicateur de niveau (5).

16. Dispositif selon la revendication 15, caractérisé en ce que l'élément d'indication (9, 37, 73) de l'indicateur de niveau est réalisé en forme de bande.

17. Dispositif selon la revendication 16, caractérisé en ce que l'élément d'indication est doté de marquages de rupture pour une adaptation aux différents volumes du pot extérieur.

18. Dispositif selon l'une quelconque des revendications 1 à 17, caractérisé en ce que le pot de culture (56, 58, 69) présente, dans sa zone marginale supérieure (52), une fente (53, 60) pour la réception d'un entonnoir de remplissage (54, 61).

19. Dispositif selon l'une quelconque des revendications 1 à 18, caractérisé en ce que le pot de culture (46) est muni, dans la zone marginale (52), d'une rainure (57) pour le guidage supplémentaire de l'élément d'indication.

20. Dispositif selon l'une quelconque des revendications 18 et 19, caractérisé en ce que la fente et le guidage supplémentaire sont intégrés.

21. Dispositif selon la revendication 20, caractérisé en ce que le guidage (64) est prévu dans l'entonnoir de remplissage (61).

22. Dispositif selon l'une quelconque des revendications 1 à 21, caractérisé en ce que la mèche aspirante est dotée, dans la zone d'aspiration (94), d'une pastille d'engrais de longue durée agissant comme un poids de ballastage (96).

23. Dispositif selon l'une quelconque des revendications 1 à 22, caractérisé en ce que la mèche aspirante est pourvue, dans l'eau, d'une feuille de protection contre la vaporisation (93), et ce, dans une zone intermédiaire entre l'unité et la zone d'aspiration (94).

Fig. 1

II

12
11
9
8
3
18
15
14
16
19
17
22
21 20 2 13
4
15
10
5
1
6 7

Fig. 2

22
19
17
20
3
7
20
15
6
8
22
12
19
10
9
5
14
20
2
19
22

**Fig. 3**

**Fig. 4**

↓ $\overline{VI}$

23

_Fig.5_

24  25  26

23

_Fig.6_

-24-  26

25

*Fig. 7*

*Fig. 8*

Fig. 9

Fig. 10

*Fig. 11*

*Fig. 12*

*Fig.13*

*Fig.14*

*Fig. 15*

*Fig. 16*

**Fig.17**

0 016 352

_Fig. 18_

Fig.19

Fig.20

_Fig. 21_